Europäisches Patentamt

European Patent Office

Office européen des brevets

(11) Veröffentlichungsnummer: **0 117 270**
**A1**

## EUROPÄISCHE PATENTANMELDUNG

(21) Anmeldenummer: 83101933.6

(22) Anmeldetag: 28.02.83

(51) Int. Cl.³: **E 05 F 11/14,** F 16 H 19/00,
A 01 G 9/24

(43) Veröffentlichungstag der Anmeldung: 05.09.84
Patentblatt 84/36

(84) Benannte Vertragsstaaten: DE

(71) Anmelder: **Johannes Lock Windenfabrik und
Maschinenbau, D-7943 Ertingen (DE)**

(72) Erfinder: **Fluhr, Berthold, Salem-Scheuer-Strasse 30,
D-7943 Ertingen (DE)**
Erfinder: **Lock, Freimut, Industriestrasse 2,
D-7943 Ertingen (DE)**

(74) Vertreter: **Patentanwälte Dipl.-Ing. E. Eisele Dr.-Ing. H.
Otten, Goetheplatz 7, D-7980 Ravensburg (DE)**

(54) **Zahnstangentrieb, insbesondere zur Betätigung von Fensterflügeln.**

(57) Bei diesem Zahnstangentrieb ist ein feststehendes Lagergehäuse (1) vorgesehen, in welchem ein Ritzel (7) oder eine mit dem Ritzel (7) fest verbundene Antriebswelle (20) drehbar gelagert ist, sowie eine Zahnstange (11), die mittels eines um die Ritzelachse schwenkbaren Führungsteils mit dem Ritzel in Eingriff gehalten wird. Zwecks konstruktiver Vereinfachung und Erhöhung der Belastbarkeit der Zahnstange (11) weist das Lagergehäuse (1) eine zum Ritzel (7) gleichachsige kreisbogenförmige Innenlagerfläche (10) auf und das Führungsteil ist als gleitfähiger Stützkörper (13) ausgebildet, der zwischen dem Rücken der Zahnstange (11) und der Innenlagerfläche (10) eingepaßt ist. Das Lagergehäuse (1) kann aus zwei Halbschalen (2, 3) bestehen, deren Umfangswandungen die Innenlagerfläche (10) bilden. Die Zahnstange (11) tritt durch ausgesparte Fensteröffnungen (12). Der Stützkörper (13) besteht vorzugsweise aus einem gleitfähigen Kunststoff und umgreift auch die Flanken der Zahnstange (11). Er kann in Umfangsrichtung verlängert oder zu einem vollständigen Ring ausgestaltet sein. Statt einer können auch zwei gegenläufige Zahnstangen (11) mit dem Ritzel (7) kämmen, die beide unabhängig voneinander schwenkbar sind.

0117270

## Zahnstangentrieb, insbesondere zur Betätigung von Fensterflügeln.

Die Erfindung bezieht sich auf einen Zahnstangentrieb, insbesondere zur Betätigung von Fensterflügeln, mit einem feststehenden Lagergehäuse, in welchem ein Ritzel oder eine mit dem Ritzel fest verbundene Antriebswelle drehbar gelagert ist, und mit einer Zahnstange, die mittels eines um die Ritzelachse schwenkbaren Führungsteils mit dem Ritzel in Eingriff gehalten wird.

Ein Zahnstangentrieb dieser Art, wie er beispielsweise aus der Deutschen Patentschrift 21 60 280 bekannt geworden ist, hat zwei wesentliche Funktionsmerkmale, die insbesondere bei Gewächshäusern von Bedeutung sind, deren in einer Reihe angeordnete Lüftungsflügel gemeinsam betätigt werden. Das eine Merkmal ist die Schwenkbarkeit der Zahnstange um die Ritzelachse, damit die Zahnstange der bogenförmigen Bewegungsbahn des Angriffspunktes der Zahnstange am Fensterrahmen folgen kann. Das andere Merkmal besteht darin, daß die Antriebswelle an den gleichen Stellen gelagert ist, an denen sie über die einzelnen Ritzel die Zahnstangenkräfte, beispielsweise das auf die Zahnstangen drückende Gewicht
der Fensterflügel, aufzunehmen hat. Dadurch wird eine Biegebeanspruchung der Antriebswelle vermieden.

Bei der bekannten Konstruktion nach der vorerwähnten Patentschrift ist eine querschnittlich U-förmige Zahnstange vorgesehen und ein Ritzel mit Triebstockverzahnung, bestehend
aus zwei Scheiben, die durch kreisförmig angeordnete Nietbolzen miteinander verbunden sind, wobei jeder Nietbolzen
von einer drehbaren Hülse umgeben ist. Ein feststehender,
alle Hülsen umschließender Tragring dient als Lager für
dieses Ritzel und das Führungsteil besteht aus zwei Bügeln,
an deren Schenkelenden Rollen angebracht sind. Die Bügel
liegen in ihrem Scheitelbereich neben dem Tragring auf den
Hülsen des Ritzels auf und ziehen mit ihren Rollen die Zahnstange an das Ritzel heran.

Nachteilig an dieser Konstruktion ist ihre geringe Tragkraft. Die Einzelteile sind durchweg aus Blech gefertigt.
Durch die vielen Rollen und Bolzen ergeben sich viele Verschleißstellen. Sollen aber große Fensterflügel betätigt
und müssen zusätzliche Windkräfte beherrscht werden, so
sind tragfähigere Lagerstellen vonnöten, was letztlich zu
sehr komplizierten und aufwendigen Konstruktionen führt.
Beispielhaft hierfür sind die Deutsche Auslegeschrift
10 50 229 und die Britische Patentschrift 117 876. Die konstruktiven Schwierigkeiten kommen daher, daß zu beiden Seiten des Ritzels drei relativ zueinander drehbare Teile aneinander oder ineinander gelagert werden müssen.

Der Erfindung liegt die Aufgabe zugrunde, einen für größte Zahnstangenbelastungen geeigneten Zahnstangentrieb vorzuschlagen, der einfach aufgebaut und dementsprechend zuverlässig, wartungsfrei und kostengünstig ist.

Diese Aufgabe wird ausgehend von einem Zahnstangentrieb der einleitend bezeichneten Art erfindungsgemäß dadurch gelöst, daß das Lagergehäuse eine zum Ritzel gleichachsige kreisbogenförmige Innenlagerfläche aufweist, und daß das Führungsteil als gleitfähiger Stützkörper ausgebildet ist, der zwischen dem Rücken der Zahnstange und der Innenlagerfläche eingepaßt ist. Der Krümmungsradius der vorzugsweise zylindrischen Innenlagerfläche für den Stützkörper ist bei der bevorzugten Ausführungsform der Erfindung größer als die Summe aus dem Außenradius des Ritzels und der Höhe der Zahnstange. Der Krümmungsradius kann aber auch kleiner als der Außenradius des Ritzels sein. In diesem Fall übergreift der Stützkörper die Zahnstange und läuft mit zwei seitlich angeordneten, Außenlagerflächen aufweisenden Ansätzen auf zwei Innenlager-Flächenbahnen zu beiden Seiten des Ritzels.

Jedenfalls liegt die Innenlagerfläche für den Stützkörper radial weiter außen am Lagergehäuse als die Innenlagerfläche für das Ritzel oder die Antriebswelle, sofern diese mit dem Ritzel ein Stück bildet. Der Konstrukteur ist deshalb hinsichtlich der Ausbildung der zuletzt genannten Lagerstelle völlig frei, er kann z. B. serienmäßige Gleitlager- oder Kugellagerteile verwenden.

Der Stützkörper besteht vorzugsweise aus einem gleitfähigen Kunststoff. Vorzugsweise füllt er den kreisabschnittförmigen Raum zwischen dem Rücken der Zahnstange und der Innenlagerfläche aus. Damit wird das Konstruktionsprinzip der bekannten Führungsteile verlassen, welche sowohl die Zahnstange als auch die Antriebswelle umgreifen und somit auf einer (konvexen) Außenlagerfläche aufliegen. Statt dessen stützt der Stützkörper die Zahnstange gegenüber der radial weiter außen liegenden (konkaven) Innenlagerfläche ab, wobei er an der Innenlagerfläche gleitet und dadurch die notwendige Schwenkbewegung der Zahnstange ermöglicht.

Um der Zahnstange auch eine seitliche Führung zu geben, wird vorgeschlagen, daß der Stützkörper die Zahnstange umgreift und ihre Flanken an Radialflächen des Lagergehäuses abstützt. Damit wird ein Kippen der Zahnstange verhindert und eine auf sie wirkende Axialkraft aufgefangen.

Das Lagergehäuse hat vorzugsweise die Form einer das Ritzel umschließenden flachen Dose, bestehend aus zwei Halbschalen, in denen - vorzugsweise mittels je eines Lagerrings aus Kunststoff, Bronze oder eines Kugellagerrings - das Ritzel gelagert ist und deren Umfangswandungen die Innenlagerfläche bilden, wobei Fensteröffnungen zum Durchtritt der Zahnstange zwischen den Halbschalen freigespart sind. Diese Fensteröffnungen müssen so groß sein, daß sie die notwendige Schwenkbewegung der Zahnstange nicht behindern.

Weiter wird vorgeschlagen, daß der Stützkörper in Umfangsrichtung der Innenlagerfläche verlängert ist und dem Zahnstangenquerschnitt genau entsprechende Durchlässe aufweist. Auf diese Weise verschließt der Stützkörper die vergrößerten Fensteröffnungen des Lagergehauses, wirkt dadurch als Fingerschutz und verhindert das Eindringen von Schmutz und Fremdkörpern. Schließlich können die Verlängerungen des Stützkörpers an den Enden zu einem vollständigen Ring vereinigt sein, sofern auch die Innenlagerfläche vollkreisförmig ist. Jede Verlängerung und insbesondere die Vollkreisform des Stützkörpers hat den entscheidenden Vorteil, daß der Stützkörper und die Zahnstange sich nicht im Lagergehäuse verklemmen können.

Zur Materialersparnis kann die Innenlagerfläche nur einen Kreisbogen bilden und auch das Lagergehäuse auf einen entsprechenden Sektor verkleinert sein.

Das Ritzel kann eine hohle Nabe aufweisen oder in eine Hohlnabe oder Hülse eingearbeitet sein. Die Hohlnaben können dann auf eine längere gemeinsame Antriebswelle aufgesteckt und an dieser befestigt werden. Ebenso kann das Ritzel aber auch einen unrunden Durchbruch zum Einstecken einer profilierten Antriebswelle aufweisen oder als Vollwelle ausgelegt sein. Schließlich kann das Ritzel über einen zusätzlichen Schnecken- oder Zahnradtrieb angetrieben werden, der am Lagergehäuse angeordnet sein kann.

Anstelle von Gleitlagern können für das Ritzel und den Stützkörper auch Wälzlager vorgesehen sein. Insbesondere kann der Stützkörper an seinen belasteten Stellen mit einer Kugelmatte belegt oder mit Druckrollen versehen sein und sich ausschließlich über diese an der Innenlagerfläche und an der Zahnstange abstützen.

In Weiterbildung der Erfindung wird vorgeschlagen, daß zwei mit einem Ritzel kämmende gegenläufige Zahnstangen mit je eigenen Stützkörpern vorgesehen sind. Dies erfordert nur eine entsprechende Vergrößerung der Fensteröffnungen des Lagergehäuses. Insbesondere können dessen Deckel und Boden an nur zwei einander diametral gegenüberliegenden Stellen miteinander verbunden sein, so daß sich zwei Fensteröffnungen von je nahezu 180° Bogenlänge ergeben. Dabei können beide Zahnstangen in einem bestimmten Winkelbereich unabhängig voneinander schwenken.

Ein Ausführungsbeispiel der Erfindung wird nachfolgend anhand der Zeichnung erläutert. Im einzelnen zeigt

Fig. 1    eine räumliche Darstellung eines Zahnstangentriebs,

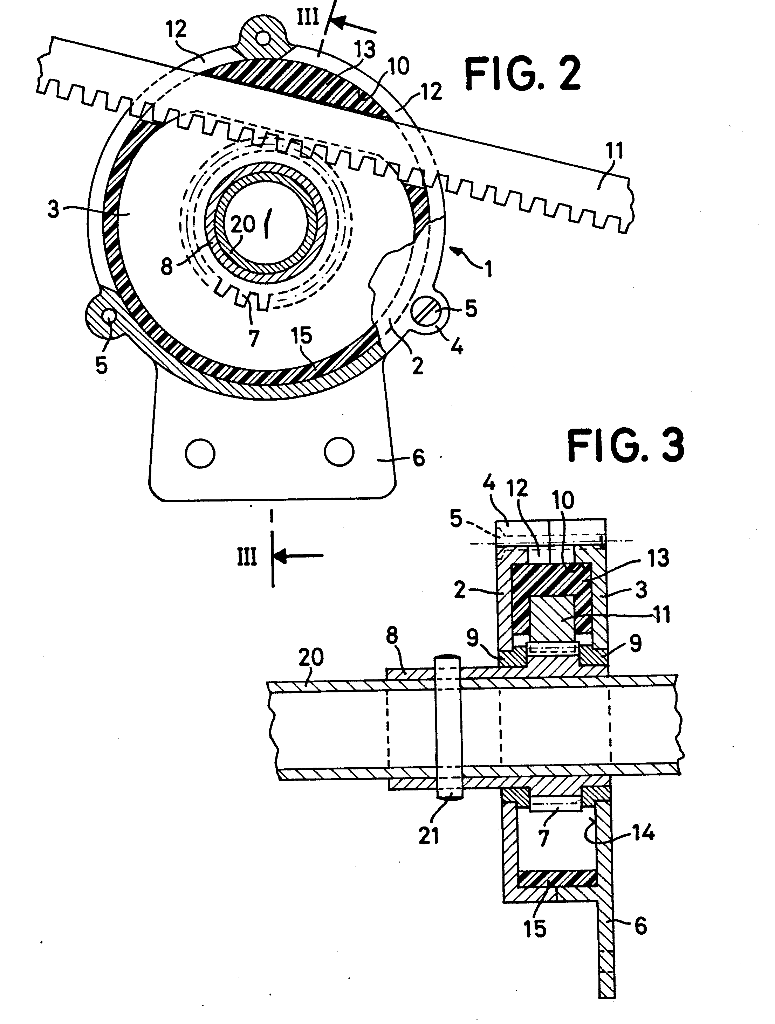

Fig. 2    einen Radialschnitt des Zahnstangentriebes nach Fig. 1,

Fig. 3    einen Axialschnitt III-III des Zahnstangentriebes nach Fig. 1 und

Fig. 4    ein schematisches Anwendungsbeispiel des Zahnstangentriebes nach Fig. 1 in kleinerem Maßstab.

Das Lagergehäuse 1 besteht im Beispiel aus zwei runden Halbschalen 2 und 3, die je drei um 120° gegeneinander versetzte Augen 4 aufweisen und mittels dreier Schrauben 5 miteinander verbunden sind. An der Halbschale 3 ist eine Befestigungslasche 6 angeformt. Ein Ritzel 7 bildet ein Stück mit einer Hohlnabe 8, welche mittels zweier Lagerringe 9 in den Halbschalen 2, 3 gelagert ist und nach einer Seite aus dem
Lagergehäuse 1 hervorsteht. Die zylindrischen Randstreifen
der Halbschalen bilden auf ihrer Innenseite eine Innenlagerfläche 10.

Mit dem Ritzel 7 kämmt eine Zahnstange 11, welche durch
zwei Fensteröffnungen 12 tritt, die durch Randaussparungen
der Halbschalen 2, 3 gebildet sind und sich je über einen
Bogen von nahezu 120° erstrecken. In dem Lagergehäuse 1 befindet sich ein insgesamt mit 13 bezeichneter Stützkörper
aus einem gleitfähigen Kunststoff, der unter der Bezeichnung "POM" im Handel ist. Die kreisabschnittförmige Hauptpartie des Stützkörpers 13 umgreift die Zahnstange 11 und
füllt den Raum zwischen dem Rücken der Zahnstange und der
Innenlagerfläche 10 sowie zwischen den Zahnstangenflanken
und den ebenen Innenflächen 14 der Halbschalen 2, 3 aus.
Die sich verjüngenden Enden der Hauptpartie des Stützkörpers 13 sind miteinander verbunden und bilden einen Ring
15, der die gesamte übrige Innenlagerfläche 10 belegt.

Die Skizze nach Fig. 4 zeigt ein Anwendungsbeispiel für den
beschriebenen Zahnstangentrieb. Ein um die Achse 16 schwenkbarer Fensterflügel 17 ist über ein Gelenk 18 mit der Zahnstange 11 verbunden. Das Lagergehäuse 1 ist an einem festen
Gebäudeteil 19 angeschraubt.

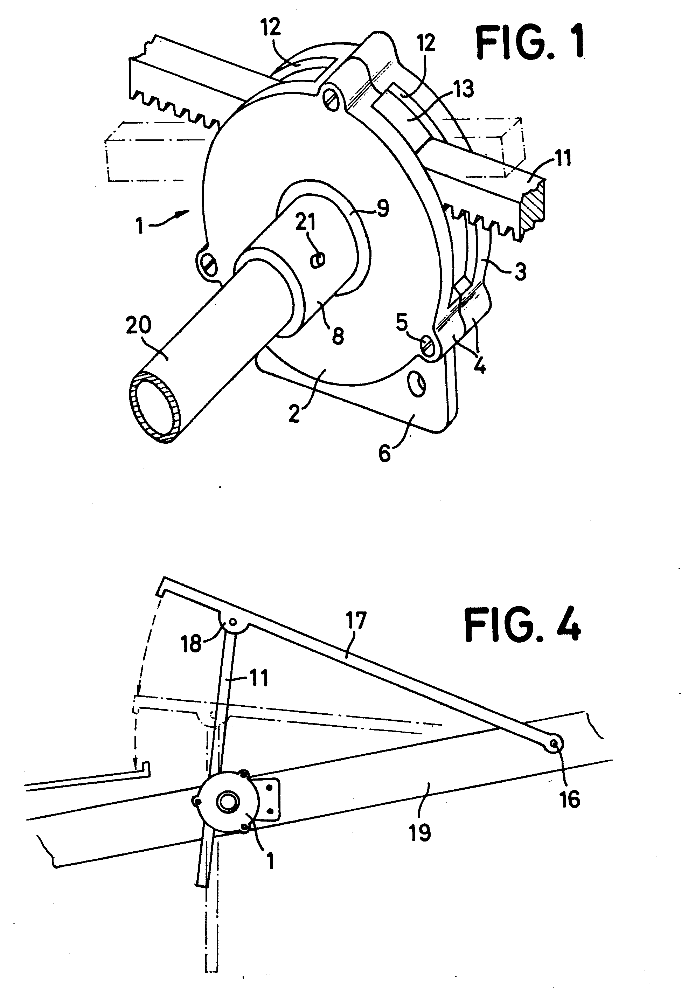

Über eine rohrförmige Antriebswelle 20, die durch die Hohlnabe 8 gesteckt und mittels eines Querstiftes 21 mit dieser
fest verbunden ist, wird das Ritzel 7 angetrieben. Die
gleichzeitig mit ihrer Längsbewegung eintretende Schwenkbewegung der Zahnstange 11 ist möglich, weil der Stützkörper
13 im Lagergehäuse 1, insbesondere auf der Innenlagerfläche
10, gleitet und außerdem die Fensteröffnungen 12 groß genug
sind. Fig. 1 zeigt, wie unabhängig von der Schwenklage der
Zahnstange 11 die Fensteröffnungen 12 durch den Stützkörper
13 verschlossen sind, was vorteilhafterweise den Eintritt
von Fremdkörpern in das Lagergehäuse 1 sowie dessen übermäßige Verschmutzung verhindert.

Abweichend von diesem Beispiel könnten auch die restlichen
Randstreifen der Halbschalen 2, 3 zu einer dritten Fensteröffnung ausgespart sein. Dadurch ließe sich die Zahnstange
11 in zwei weiteren Winkelstellungen einsetzen und das
Lagergehäuse 1 wäre variabler. Die Erfindung beschränkt
sich im übrigen nicht auf die gezeigte Befestigungsart des
Lagergehäuses und auch nicht auf einen rechteckigen Zahnstangenquerschnitt. Vielmehr kann die Befestigung dem
jeweiligen Bedarf und der Stützkörper jedem Zahnstangenquerschnitt angepaßt werden.

Patentansprüche

1.      Zahnstangentrieb, insbesondere zur Betätigung von Fensterflügeln (17), mit einem feststehenden Lagergehäuse (1), in welchem ein Ritzel (7) oder eine mit dem Ritzel (7) fest verbundene Antriebswelle (20) drehbar gelagert ist, und mit einer Zahnstange (11), die mittels eines um die Ritzelachse schwenkbaren Führungsteils mit dem Ritzel in Eingriff gehalten wird, dadurch gekennzeichnet, daß das Lagergehäuse (1) eine zum Ritzel (7) gleichachsige kreisbogenförmige Innenlagerfläche (10) aufweist, und daß das Führungsteil als gleitfähiger Stützkörper (13) ausgebildet ist, der zwischen dem Rücken der Zahnstange (11) und der Innenlagerfläche (10) eingepaßt ist.

2.      Zahnstangentrieb nach Anspruch 1, dadurch gekennzeichnet, daß das Lagergehäuse (1) die Form einer das Ritzel (7) umschließenden flachen Dose hat, bestehend aus zwei Halbschalen (2, 3), in denen das Ritzel (7) gelagert ist und deren Umfangswandungen die Innenlagerfläche (10) bilden, wobei Fensteröffnungen (12) zum Durchtritt der Zahnstange (11) zwischen den Halbschalen freigespart sind.

0117270

3.    Zahnstangentrieb nach Anspruch 1, dadurch gekennzeichnet, daß der Stützkörper (13) aus einem gleitfähigen
Kunststoff besteht.

4.    Zahnstangentrieb nach Anspruch 1, dadurch gekennzeichnet, daß der Stützköprer (13) die Zahnstange (11) umgreift und ihre Flanken an Radialflächen (14) des Lagergehäuses (1) abstützt.

5.    Zahnstangentrieb nach Anspruch 1, dadurch gekennzeichnet, daß der Stützkörper (13) in Umfangsrichtung der
Innenlagerfläche (10) verlängert ist und dem Zahnstangenquerschnitt entsprechende Durchlässe aufweist.

6.    Zahnstangentrieb nach Anspruch 1, dadurch gekennzeichnet, daß das Ritzel (7) eine Hohlnabe (8) aufweist und
auf einer durchgesteckten Antriebswelle (20) befestigbar
ist.

7.    Zahnstangentrieb nach Anspruch 1, dadurch gekennzeichnet, daß zwei mit einem Ritzel kämmende gegenläufige
Zahnstangen mit je eigenen Stützkörpern vorgesehen sind.

0117270

1/2

FIG. 1

FIG. 4

FIG. 2

FIG. 3

Europäisches
Patentamt

**EUROPÄISCHER RECHERCHENBERICHT**

0 1 1 7 2 7 0
Nummer der Anmeldung

EP    83 10 1933

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | FR-A-2 204 167   (EHRENREICH)<br>* Insgesamt * | 1 | E 05 F    11/14<br>F 16 H    19/00<br>A 01 G     9/24 |
| A | US-A-3 267 751   (LITTMANN)<br>* Spalte 2, Zeilen 11-62; Figuren 1-6 * | 1 | |
| A | GB-A-  263 406   (ROBERTS)<br>* Seite  2, Zeilen 4-36; Figuren 2,3 * | 1,2,6 | |
| A | FR-A-1 096 184   (TELEFLEX PRODUCTS)<br>* Seite 2, Abschnitt 1,2; Figur 1 * | 1 | |
| A | FR-A-2 338 370<br>(HANDELSONDERNEMING OCKHUIZEN)<br>* Figuren 1-5 * | 1,2,6,<br>7 | **RECHERCHIERTE SACHGEBIETE (Int. Cl. ³)**<br><br>E 05 F<br>F 16 H<br>A 01 G |

Der vorliegende Recherchenbericht wurde für alle Patentansprüche erstellt.

| Recherchenort<br>DEN HAAG | Abschlußdatum der Recherche<br>30-09-1983 | Prüfer<br>NEYS B.G. |
|---|---|---|